# EUROPEAN PATENT APPLICATION

(11) **EP 4 770 158 A1**
(43) Date of publication of application: **01.07.2026**
(21) Application number: 25863868.3
(22) Date of filing: 23.07.2025
(51) Int. Cl.: H04W 12/10, H04W 12/069, H04L 9/32, H01M 10/42

(54) **COMMUNICATION ID ALLOCATION SYSTEM AND SYSTEM FOR PROVIDING SAME**

(30) Priority: 03.09.2024 KR 20240119468
(71) Applicant: LG Energy Solution, Ltd., Seoul 07335 (KR)
(72) Inventor: LEE, Bokyun, Daejeon 34122 (KR)
(74) Representative: Plasseraud IP
(86) International application number: PCT/KR2025/010906
(87) International publication number: WO 2026/054317

(57) **Abstract**

A system for allocating a communication ID according to an embodiment includes a plurality of slave BMSs each storing a plurality of first certificates, and a master BMS including a certificate chain, wherein the master BMS includes a memory for storing the certificate chain, and a processor that transmits a certificate transmission request signal to the plurality of slave BMSs based on detecting communication connection with the plurality of slave BMSs, receives each of the plurality of first certificates from each of the plurality of slave BMSs, verifies the integrity of each of the plurality of first certificates using the certificate chain, determines the validity of each of the plurality of slave BMSs based on whether each of the plurality of first certificates is intact, and allocates a first communication ID to valid slave BMSs among the plurality of slave BMSs.

## Description

### CROSS-REFERENCE TO RELATED APPLICATION

This application claims priority to and the benefit of Korean Patent Application No. 10-2024-0119468 filed at the Korean Intellectual Property Office on September 3, 2024, the entire contents of which are incorporated herein by reference.

The present disclosure relates to a method for assigning a communication ID for communication between a master battery management system (BMS) and a plurality of slave BMSs, and a system providing the same.

### [Background Art]

In a battery pack including a plurality of battery modules, a battery management system (BMS) may include a plurality of slave BMSs that monitor and manage each of the plurality of battery modules, and a master BMS that manages the plurality of slave BMSs in an integrated manner. The plurality of slave BMSs may transmit battery data, including voltage and temperature information of battery cells, to the master BMS through various communication methods.

In communication between the master BMS and the plurality of slave BMSs, since the master BMS is connected to the plurality of slave BMSs that perform the same operation, it is necessary to assign a communication ID to distinguish each of the plurality of slave BMSs.

Conventionally, a manual assignment method was used in which a specialized engineer was involved in the initial connection of the slave BMS and the master BMS to individually set the current configuration location and communication connection ID of each slave BMS, or a method was used in which a predetermined voltage was applied to each of the plurality of slave BMSs to sequentially wake them up and assign a communication ID.

However, the conventional communication ID allocation method assigns the communication ID to each slave BMS without a separate authentication process when assigning the communication ID from the master BMS, so even if one of the plurality of battery modules in the battery pack is replaced with a battery module whose security has not been confirmed, the communication ID is assigned to the plurality of slave BMSs connected to the entire battery module, which has the problem of low security for the battery pack.

Accordingly, there is a need for a method to improve the security and stability of a battery pack by blocking the assignment of the communication ID to untrusted battery modules among the plurality of battery modules within the battery pack.

### [Disclosure]

### [Technical Problem]

The present disclosure attempts to provide a method for assigning a communication ID with improved security and stability, and a system for providing the same, by determining the validity of a plurality of slave BMSs before assigning the communication ID to the plurality of slave BMSs.

### [Technical Solution]

A system for allocating a communication ID according to an embodiment includes a plurality of slave BMSs each storing a plurality of first certificates, and a master BMS including a certificate chain, wherein the master BMS includes a memory for storing the certificate chain, and a processor that transmits a certificate transmission request signal to the plurality of slave BMSs based on detecting communication connection with the plurality of slave BMSs, receives each of the plurality of first certificates from each of the plurality of slave BMSs, verifies the integrity of each of the plurality of first certificates using the certificate chain, determines the validity of each of the plurality of slave BMSs based on whether each of the plurality of first certificates is intact, and allocates a first communication ID to valid slave BMSs among the plurality of slave BMSs.

The processor may determine whether the certificate chain is intact by verifying the signatures of second and third certificates included in the certificate chain, and determines that the second certificate is valid based on determining that the certificate chain is intact, and verifies the integrity of each of the plurality of first certificates by verifying the signature of each of the plurality of first certificates using a public key of the valid second certificate.

The processor may determine a slave BMS storing a first certificate whose integrity has been verified as valid, and determine a slave BMS storing a first certificate whose integrity has not been verified as invalid among the plurality of slave BMSs.

The processor may allocate the first communication ID using a voltage difference or communication signal value of the valid slave BMSs.

The processor may transmit a communication ID reset signal to a non-replaced slave BMS among the plurality of slave BMSs to reset the first communication ID based on detecting replacement of at least one slave BMS among the plurality of slave BMSs, and transmit a certificate transmission request signal to the non-replaced slave BMS and the replaced slave BMS to receive the first certificate from the non-replaced slave BMS and the replaced slave BMS.

The processor may determine the validity of the non-replaced slave BMS based on whether the integrity of the first certificate received from the non-replaced slave BMS is verified, and determine the validity of the replaced slave BMS based on whether the integrity of the first certificate received from the replaced slave BMS is verified.

The processor may determine a slave BMS storing a first certificate whose integrity has been verified as valid, and determine a slave BMS storing a first certificate whose integrity has not been verified as invalid among the non-replaced slave BMS and the replaced slave BMS.

The processor may reallocate a second communication ID to a valid slave BMS among the non-replaced slave BMS and the replaced slave BMS.

A method for allocating a communication ID includes a master BMS transmitting a certificate transmission request signal to a plurality of slave BMSs based on detecting communication connection with a plurality of slave BMSs, receiving each of a plurality of first certificates from each of the plurality of slave BMSs, verifying the integrity of each of the plurality of first certificates using a certificate chain stored in memory, and determining the validity of each of the plurality of slave BMSs based on whether each of the plurality of first certificates is intact, and allocating a first communication ID to the valid slave BMSs among the plurality of slave BMSs.

The determining of the validity of each of the plurality of slave BMSs may include the master BMS verifying the integrity of the certificate chain to confirm the validity of the second certificate included in the certificate chain, and verifying the integrity of each of the plurality of first certificates by verifying the signature of each of the plurality of first certificates using the public key of the valid second certificate.

The assigning of the first communication ID may include the master BMS transmitting a communication ID allocation signal to the valid slave BMSs to instruct allocation of the first communication ID.

The method may include a master BMS 200 resetting the first communication ID allocated to a non-replaced slave BMS among the plurality of slave BMSs based on detecting the replacement of at least one slave BMS among the plurality of slave BMSs to which the first communication ID is allocated, and generating and transmitting a certificate transmission request signal to the non-replaced slave BMS and the replaced slave BMS, receiving a first certificate from each of the non-replaced slave BMS and the replaced slave BMS, verifying the integrity of the first certificate using the certificate chain and determining the validity of the non-replaced slave BMS and the replaced slave BMS based on whether the first certificate is intact, and reallocating a second communication ID to a valid slave BMS among the non-replaced slave BMS and the replaced slave BMS.

The determining of the validity of the non-replaced slave BMS and the replaced slave BMS may include the master BMS verifying the integrity of the certificate chain to confirm the validity of the second certificate included in the certificate chain, and verifying the integrity of each of the plurality of first certificates by verifying the signature of each of the plurality of first certificates using the public key of the valid second certificate.

The reallocating of the second communication ID may include transmitting a communication ID reallocation signal to a valid slave BMS among the non-replaced slave BMS and the replaced slave BMS to instruct reallocation of the second communication ID.

### [Advantageous Effects]

According to an embodiment of the present disclosure, it is possible to improve the security and stability of a battery pack by blocking allocation of a communication ID to an untrusted battery module among a plurality of battery modules in the battery pack.

Effects that may be obtained from the present disclosure are not limited to only those mentioned above, and other effects which are not described herein would be apparent to those skilled in the art from the following description.

### [Description of the Drawings]

FIG. 1 illustrates a system for allocating a communication ID according to an embodiment of the present disclosure.
FIG. 2 illustrates the process by which a master BMS, according to an embodiment of the present disclosure, verifies the integrity of a first certificate using a certificate chain.
FIG. 3 is a flowchart illustrating a process of allocating communication IDs to a plurality of slave BMSs.
FIG. 4 is a flowchart illustrating a process in which the master BMS reallocates a communication ID when one of the plurality of slave BMSs is replaced.
FIG. 5 is a flowchart of a method for allocating a battery module communication ID according to an embodiment of the present disclosure.

### [Mode for Invention]

When describing the embodiments disclosed in the present disclosure, if it is determined that a detailed description of a related known technology may obscure the gist of the embodiments disclosed in this specification, such a detailed description is omitted. The accompanying drawings are intended only to facilitate understanding of the exemplary embodiments disclosed in this specification, and it is to be understood that the technical ideas disclosed herein are not limited by the accompanying drawings and include all modifications, equivalents, or substitutions that are within the range of the ideas and technology of the present disclosure.

Although the terms "first," "second," and the like are used to explain various components, the components are not limited to such terms. These terms are only used to distinguish one component from another component.

It is to be understood that when one component is referred to as being "connected" or "coupled" to another component, it may be connected or coupled directly to another component or there may be other intervening components. On the other hand, it is to be understood that when one component is referred to as being "directly connected" or "directly coupled" to another component, there are no other intervening components.

Throughout the specification, the terms "comprise" and "have" are intended to specify the presence of stated features, integers, steps, operations, components, or a combination thereof, but do not preclude the presence or addition of one or more other features, integers, steps, operations, components, or combinations thereof.

Hereinafter, the present disclosure is described in detail with reference to the attached drawings.

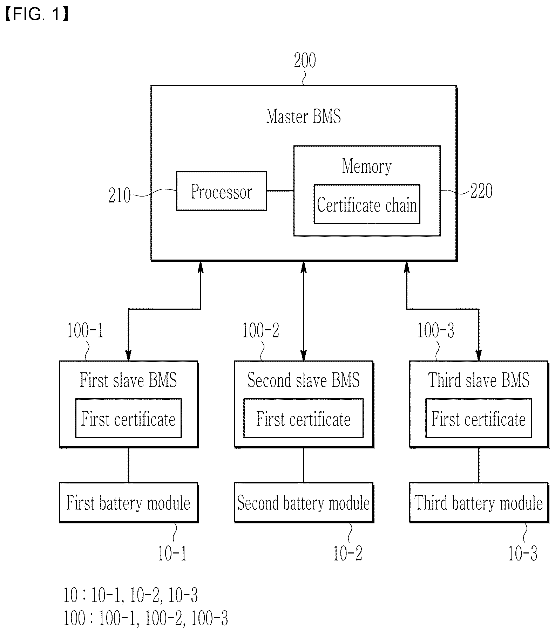

FIG. 1 illustrates a system for allocating a communication ID according to an embodiment of the present disclosure.

Referring to FIG. 1, the system for allocating the communication ID according to an embodiment of the present disclosure may include a plurality of slave BMSs 100: 100-1, 100-2, and 100-3 and a master BMS 200. Although FIG. 1 illustrates that the system for allocating the communication ID includes three slave BMSs 100 and one master BMS 200, the present disclosure is not limited thereto. The system for allocating the communication ID may include one or more slave BMSs 100. A plurality of slave BMSs 100 included in the system for allocating the communication ID may correspond to the master BMS 200 in a many-to-one ratio. Although FIG. 1 illustrates that the slave BMS 100 and the master BMS 200 are connected by wires, but the present disclosure is not limited thereto, and the slave BMS 100 and the master BMS 200 may transmit and receive data through wireless communication.

The slave BMS 100 may be electrically connected to a battery module 10 in a configuration that monitors and controls battery modules 10: 10-1, 10-2, and 10-3. For example, the slave BMS 100 may measure or predict the status of a battery cell included in the battery module 10 and transmit the status information of the battery cell to the master BMS 200. The slave BMS 100 may control the battery module 10 according to a control signal received from the master BMS 200.

A first certificate may be stored in the slave BMS 100. Here, the first certificate is generated to determine the validity of the slave BMS 100, and may be generated at the time of manufacturing the slave BMS 100 and stored in a memory (not shown in the drawing) of the slave BMS 100. The first certificate may be generated by the manufacturer of the slave BMS 100 or a certificate authority (CA) that has been requested to generate a certificate chain by the manufacturer. Here, the memory of the slave BMS 100 may be built into a MUC or battery monitoring IC (BMIC).

The master BMS 200 may manage the plurality of slave BMSs 100 in an integrated manner. The master BMS 200 may control the operation of the battery module 10 using the status information of the battery cells received from the plurality of slave BMSs 100. The master BMS 200 may generate a signal to control the operation of the battery module 10 and transmit the signal to the plurality of slave BMSs 100. For example, the master BMS 200 may perform power limiting, cell balancing, cooling control, etc. for the battery module 10 by using the cell voltage, temperature, etc. of the battery module 10.

The master BMS 200 may detect communication connections with the plurality of slave BMSs 100 and replacement of at least one slave BMS 100 among the plurality of slave BMSs 100. The master BMS 200 may determine the validity of the plurality of slave BMSs 100 and allocate a first communication ID or a second communication ID to the valid slave BMSs 100. Here, the first communication ID refers to a communication ID allocated to the plurality of slave BMSs 100 before at least one of the plurality of slave BMSs 100 is replaced. The second communication ID refers to a communication ID that is reallocated to the valid slave BMSs 100 after at least one of the slave BMSs 100 is replaced. According to an embodiment, the master BMS 200 may include a processor 210 and a memory 220.

The processor 210 may detect communication connections with the plurality of slave BMSs 100. Various conventionally known methods may be applied to the method of detecting communication connections between the processor 210 and the plurality of slave BMSs 100.

When a communication connection with the plurality of slave BMSs 100 is detected, the processor 210 may transmit a certificate transmission request signal to the plurality of slave BMSs 100. Here, the certificate transmission request signal refers to a control signal requesting transmission of the first certificate stored in the plurality of slave BMSs 100. According to an embodiment, the processor 210 may broadcast a certificate transmission request signal to the plurality of slave BMSs 100.

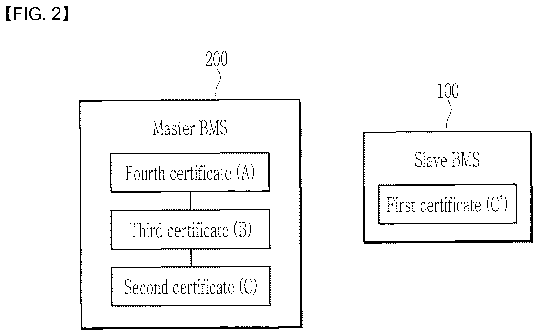

The processor 210 may determine the validity of each of the plurality of slave BMSs 100 using the plurality of first certificates received from the plurality of slave BMSs 100. According to an embodiment, the processor 210 may verify the integrity of the first certificate using the certificate chain, which will be described later. Here, the certificate chain may be stored in the memory 220. The processor 210 may determine the validity of the slave BMS 100 based on the integrity of the first certificate. For example, if the integrity of the first certificate received from the slave BMS 100 is verified, the processor 210 may determine that the slave BMS 100 is valid, and if the integrity of the first certificate received from the slave BMS 120 is not verified, the processor 210 may determine that the slave BMS 100 is invalid. The process of verifying the integrity of the first certificate by the processor 210 will be described in detail below with reference to FIG. 2.

The processor 210 may allocate the first communication ID to the valid slave BMSs 100. According to an embodiment, the processor 210 may allocate the first communication ID using a voltage difference or communication signal value of valid slave BMSs 100. However, the process of allocating the first communication ID to the valid slave BMSs 100 by the processor 210 is not limited thereto, and various conventionally known methods may be applied. At this time, the processor 210 may indicate the allocation of the first communication ID by transmitting a communication ID allocation signal to the valid slave BMSs 100. According to an embodiment, the processor 210 may broadcast a communication ID allocation signal to the valid slave BMSs 100.

The processor 210 may detect replacement of at least one slave BMS 100 among the plurality of slave BMSs 100. Various conventionally known methods may be applied to the method by which the processor 210 detects the replacement of at least one slave BMS 100 among the plurality of slave BMSs 100. At this time, the plurality of slave BMSs 100 include non-replaced slave BMSs 110 (hereinafter referred to as "non-replaced slave BMSs") and replaced slave BMSs 120.

When replacement of at least one slave BMS 100 among the plurality of slave BMSs 100 is detected, the processor 210 may reset the first communication ID previously allocated to the non-replaced slave BMS 110. According to an embodiment, the processor 210 may generate a communication ID reset signal for resetting the first communication ID for the non-replaced slave BMS 110 and transmit the signal to the non-replaced slave BMSs 110. At this time, the non-replaced slave BMSs 110 may reset the allocated first communication ID in response to the communication ID reset signal.

The processor 210 may generate and transmit a certificate transmission request signal to the non-replaced slave BMS 110 and the replaced slave BMS 120. According to an embodiment, the processor 210 may broadcast the certificate transmission request signal to the non-replaced slave BMS 110 and the replaced slave BMS 120.

The processor 210 may determine the validity of the non-replaced slave BMS 110 and the replaced slave BMS 120 using the first certificate received from the non-replaced slave BMS 110 and the replaced slave BMS 120, respectively.

According to an embodiment, the processor 210 may determine the validity of the non-replaced slave BMS 110 based on whether the integrity of the first certificate received from the non-replaced slave BMS 110 is verified, and may determine the validity of the replaced slave BMS 120 based on whether the integrity of the first certificate received from the replaced slave BMS 120 is verified. For example, the processor 210 may determine that the non-replaced slave BMS 110 is valid if the integrity of the first certificate received from the non-replaced slave BMS 110 is verified. As another example, the processor 210 may determine that the replaced slave BMS 120 is invalid if the integrity of the first certificate received from the replaced slave BMS 120 is not verified.

The processor 210 may reallocate the second communication ID to the valid slave BMSs 100 among the non-replaced slave BMSs 110 and the replaced slave BMSs 120. For example, if the non-replaced slave BMS 110 is determined to be valid and the replaced slave BMS 120 is determined to be invalid, the processor 210 may reallocate the second communication ID only to the non-replaced slave BMS 110. As another example, the processor 210 may reallocate the second communication ID only to the replaced slave BMS 120 if the non-replaced slave BMS 110 is determined to be invalid and the replaced slave BMS 120 is determined to be valid. According to an embodiment, the processor 210 may reallocate the second communication ID using the voltage difference or communication signal value of the valid slave BMSs 100.

The processor 210 may instruct the reallocation of the second communication ID by transmitting a communication ID reallocation signal to the valid slave BMSs 100 among the non-replaced slave BMSs 110 and the replaced slave BMSs 120. For example, the processor 210 may broadcast a communication ID reallocation signal to the valid slave BMSs 100 among the non-replaced slave BMSs 110 and the replaced slave BMSs 120.

The certificate chain may be stored in the memory 220. Here, the certificate chain is generated to determine the validity of the master BMS 200, and may be generated at the time of manufacturing the master BMS 200 and stored in the memory 220 of the master BMS 200. At this time, the certificate chain may be generated by the manufacturer of the master BMS 200 or the certificate authority (CA) that has been requested to generate a certificate chain by the manufacturer. In some embodiments, the certificate chain may be used to verify the integrity of the first certificate. The process of verifying the integrity of the first certificate using the certificate chain will be described in detail below with reference to FIG. 2.

FIG. 2 illustrates the process by which the master BMS 200, according to an embodiment of the present disclosure, verifies the integrity of the first certificate using a certificate chain.

Referring to FIG. 2, a first certificate C' according to an embodiment of the present disclosure may include identification information for the slave BMS 100 in which the first certificate C' is stored, a signature created by a certification authority (CA) to verify the first certificate C', a public key used for encryption and verification of the signature, and the like.

A certificate chain according to an embodiment of the present disclosure may include a plurality of certificates. In some embodiments, the certificate chain may include a second certificate C, a third certificate B, and a fourth certificate A. The plurality of certificates A, B, and C included in the certificate chain may have a chain structure that is connected vertically. In some embodiments, the fourth certificate A may correspond to a superior certificate of the third certificate B, and the third certificate B may correspond to a superior certificate of the second certificate C.

The second certificate C may include identification information for slave BMSs 100 connected to the master BMS 200 where the second certificate C is stored, a signature created by the certification authority (CA) to verify the second certificate C, a public key used for encryption and verification of the signature, and the like.

The third certificate B may include identification information for the master BMS 200 in which the third certificate B is stored, a signature created by the certification authority (CA) to verify the third certificate B, a public key used for encryption and verification of the signature, and the like.

The fourth certificate A may include identification information for the battery system including the master BMS 200 in which the fourth certificate A is stored, a signature created by the certification authority (CA) to verify the fourth certificate A, a public key used for encryption and verification of the signature, and the like.

In some embodiments, the first certificate C', the second certificate C, the third certificate B, and the fourth certificate A may be issued simultaneously by the certification authority (CA). At this time, the certification authority (CA) may receive all identification information for the components of the battery system in which the first to fourth certificates A, B, C, and C' are installed from the manufacturer of the battery system. For example, the certification authority (CA) may receive information from the battery system manufacturer about a specific battery system, and information about a specific master BMS and a specific slave BMS included in the specific battery system. The certification authority (CA) may issue the first to fourth certificates A, B, C, and C' and generate a certificate chain by considering information about a specific battery system and information about a specific master BMS and a specific slave BMS included in the specific battery system.

According to an embodiment of the present disclosure, the processor 210 of the master BMS 200 may verify the integrity of the first certificate C' using the certificate chain stored in the memory 220 of the master BMS 200. The process by which the processor 210 verifies the integrity of the first certificate C' using the certificate chain is as follows.

First, the processor 210 may verify the validity of the second certificate C by verifying the integrity of the certificate chain. For example, the processor 210 may determine that the second certificate C is valid if the certificate chain is intact, and may determine that the second certificate C is invalid if the certificate chain is not intact.

The processor 210 may verify the signatures of the second certificate C and the third certificate B to determine whether the certificate chain is intact. According to an embodiment, the processor 210 may verify the signature of the second certificate C using the public key of the third certificate B and may verify the signature of the third certificate B using the public key of the fourth certificate A to determine the integrity of the certificate chain. For example, if the signature verification of both the second certificate C and the third certificate B is successful, the processor 210 may determine that the second certificate C, the third certificate B, and the fourth certificate A form a trusted certificate chain, and may determine that the second certificate C is valid.

In other words, the processor 210 may secure the reliability of the integrity verification of the first certificate C' by verifying the validity of the second certificate C used for the integrity verification of the first certificate C' before verifying the integrity of the first certificate C'.

Next, the processor 210 may verify the integrity of the first certificate C' using the valid second certificate C. According to an embodiment, the processor 210 may verify the integrity of the first certificate C' by verifying the signature of the first certificate C' using the public key of the valid second certificate C. For example, if the signature verification of the first certificate C' is successful, the processor 210 may determine that the first certificate C' is intact.

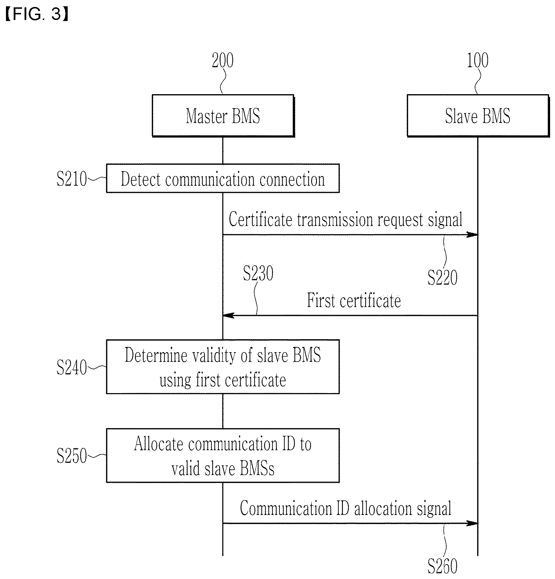

FIG. 3 is a flowchart illustrating a process of allocating communication IDs to the plurality of slave BMSs 100.

Referring to FIG. 3, the process of allocating communication IDs to the plurality of slave BMSs 100 when a communication connection between the master BMS 200 and the plurality of slave BMSs 100 is detected is illustrated.

The master BMS 200 may detect communication connections with the plurality of slave BMSs 100 (S210). Various conventionally known methods may be applied to detect communication connections between the plurality of slave BMSs 100 in the master BMS 200.

When a communication connection with the plurality of slave BMSs 100 is detected, the master BMS 200 may generate a certificate transmission request signal to receive each of the plurality of first certificates stored in the plurality of slave BMSs 100 and transmit the signal to each of the plurality of slave BMSs 100 (S220).

Each of the plurality of slave BMSs 100 may transmit each of the plurality of first certificates to the master BMS 200 in response to the certificate transmission request signal (S230).

The master BMS 200 may determine the validity of each of the plurality of slave BMSs 100 using each of the plurality of first certificates (S240). According to an embodiment, the master BMS 200 may verify the integrity of each of the plurality of first certificates using the certificate chain stored in the memory 220 (S241). The master BMS 200 may determine whether each of the plurality of slave BMSs 100 is valid based on whether each of the plurality of first certificates is intact (S242).

The master BMS 200 may allocate the first communication ID to the valid slave BMSs 100 among the plurality of slave BMSs 100 (S250).

The master BMS 200 may transmit a communication ID allocation signal to the valid slave BMSs 100 among the plurality of slave BMSs 100 to instruct the valid slave BMSs 100 to allocate the first communication ID (S260).

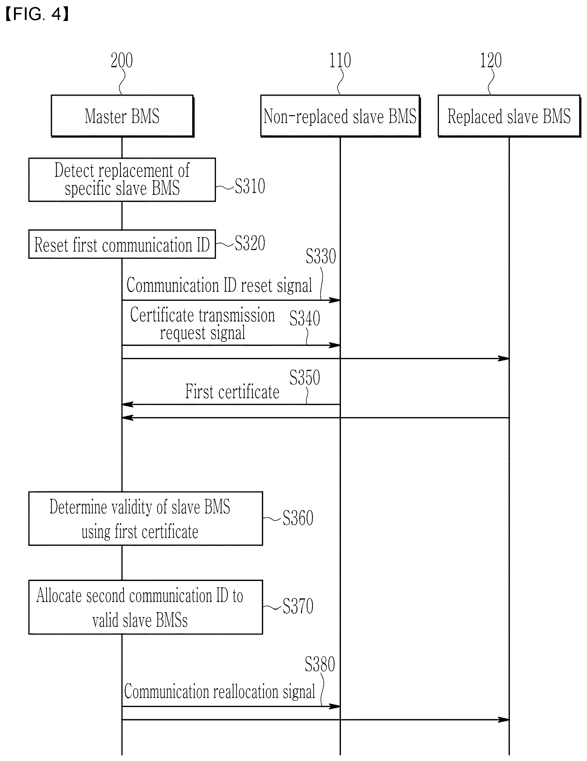

FIG. 4 is a flowchart illustrating a process in which the master BMS 200 reallocates a communication ID when one of the plurality of slave BMSs 100 is replaced.

Referring to FIG. 4, the process of reallocating a communication ID to the non-replaced slave BMS 110 and the replaced slave BMS 120 is illustrated when one of the plurality of slave BMSs 100 is replaced after a communication ID has been allocated to the plurality of slave BMSs 100.

The master BMS 200 may detect the replacement of at least one slave BMS 100 among the plurality of slave BMSs 100 (S310). At this time, the plurality of slave BMSs 100 include the non-replaced slave BMS 110 and the replaced slave BMS 120.

When replacement of a specific slave BMS 100 is detected, the master BMS 200 may reset the first communication ID allocated to the non-replaced slave BMS 110 (S320).

The master BMS 200 may generate a communication ID reset signal for resetting the first communication ID for the non-replaced slave BMS 110 and transmit the signal to the non-replaced slave BMS 110 (S330). At this time, the non-replaced slave BMS 110 may reset the allocated first communication ID in response to the communication ID reset signal.

The master BMS 200 may generate a certificate transmission request signal and transmit the signal to the non-replaced slave BMS 110 and the replaced slave BMS 120 (S340).

The non-replaced slave BMS 110 and the replaced slave BMS 120 may transmit the first certificate to the master BMS 200 in response to the certificate transmission request signal (S350).

The master BMS 200 may determine the validity of the non-replaced slave BMS 110 and the replaced slave BMS 120 using the first certificate (S360). According to an embodiment, the master BMS 200 may verify the integrity of the first certificate using the certificate chain stored in the memory 220 (S361). The master BMS 200 may determine whether the non-replaced slave BMS 110 and the replaced slave BMS 120 are valid based on whether the first certificate is intact (S362).

The master BMS 200 may reallocate the second communication ID to the valid slave BMSs 100 among the non-replaced slave BMSs 110 and the replaced slave BMSs 120 (S370).

The master BMS 200 may transmit a communication ID reallocation signal to the valid slave BMSs 100 among the non-replaced slave BMSs 110 and the replaced slave BMSs 120 to instruct the reallocation of the second communication ID to the valid slave BMSs 100 (S380).

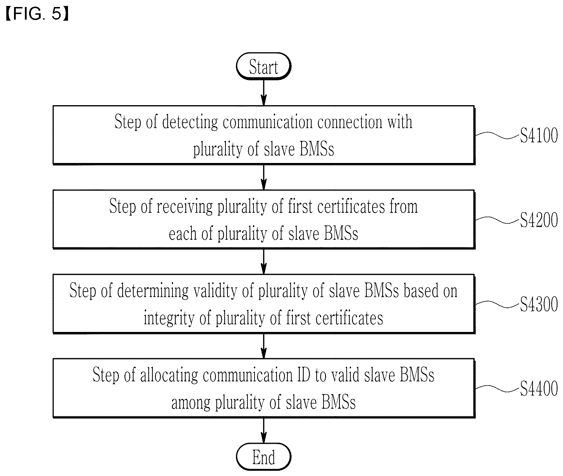

FIG. 5 is a flowchart of a method for allocating the battery module 10 communication ID according to an embodiment of the present disclosure.

Referring to FIG. 5, the method for allocating the communication ID according to an embodiment of the present disclosure may include a communication connection detection step (S4100), a first certificate reception step (S4200), a slave BMS validity determination step (S4300), and a communication ID allocation step (S4400).

In the communication connection detection step (S4100), the master BMS 200 may detect communication connections with the plurality of slave BMSs 100. At this time, the master BMS 200 may generate a certificate transmission request signal when a communication connection with the plurality of slave BMSs 100 is detected. The master BMS 200 may transmit a certificate transmission request signal to the plurality of slave BMSs 100 connected via communication.

In the first certificate reception step (S4200), the master BMS 200 may receive each of the plurality of first certificates from each of the plurality of slave BMSs 100.

In the slave BMS validity determination step (S4300), the master BMS 200 may determine the validity of each of the plurality of slave BMSs 100 using each of the plurality of first certificates.

According to an embodiment, the slave BMS validity determination step (S4300) may include a step (S4310) of the master BMS 200 verifying the integrity of each of the plurality of first certificates using the certificate chain stored in the memory 220, and a step (S4320) of the master BMS 200 determining whether each of the plurality of slave BMSs 100 is valid based on whether each of the plurality of first certificates is intact.

According to an embodiment, the step (S4310) of verifying the integrity of each of the plurality of first certificates may include a step (S4311) of the master BMS 200 verifying the validity of the second certificate by verifying the integrity of the certificate chain, and a step (S4312) of the master BMS 200 verifying the integrity of the first certificate using a valid second certificate.

In the step (S4311) of the master BMS 200 verifying the validity of the second certificate by verifying the integrity of the certificate chain, the master BMS 200 may verify the signature of the second certificate using the public key of the third certificate included in the certificate chain and verify the signature of the third certificate using the public key of the fourth certificate included in the certificate chain to determine the integrity of the certificate chain.

In the step (S4312) of verifying the integrity of the first certificate using the valid second certificate, the master BMS 200 may verify the integrity of the first certificate by verifying the signature of the first certificate using the public key of the valid second certificate.

In the communication ID allocation step (S4400), the master BMS 200 may allocate the first communication ID to the valid slave BMSs 100 among the plurality of slave BMSs 100. At this time, the master BMS 200 may instruct the allocation of the first communication ID by transmitting a communication ID allocation signal to the valid slave BMSs 100.

According to an embodiment, the method for allocating the communication ID may further include a replacement detection step (S4500), a first certificate re-reception step (S4600), a slave BMS validity re-determination step (S4700), and a communication ID re-allocation step (S4800).

In the replacement detection step (S4500), the master BMS 200 may detect the replacement of at least one slave BMS 100 among the plurality of slave BMSs 100 to which the first communication ID is allocated. When the replacement of at least one slave BMS 100 among the plurality slave BMSs 100 is detected, the master BMS 200 may reset the first communication ID allocated to the non-replaced slave BMS 110. For example, the master BMS 200 may transmit a communication ID reset signal to the non-replaced slave BMSs 110. The master BMS 200 may generate and transmit a certificate transmission request signal to the non-replaced slave BMS 110 and the replaced slave BMS 120.

In the first certificate re-reception step (S4600), the master BMS 200 may receive the first certificate from each of the non-replaced slave BMS 110 and the replaced slave BMS 120.

In the slave BMS validity re-determination step (S4700), the master BMS 200 may determine the validity of each of the non-replaced slave BMS 110 and the replaced slave BMS 120 using the first certificates received from the non-replaced slave BMS 110 and the replaced slave BMS 120.

According to an embodiment, the slave BMS validity re-determination step (S4700) may include a step (S4710) of the master BMS 200 verifying the integrity of the first certificate using the certificate chain stored in the memory 220, and a step (S4720) of the master BMS 200 determining whether the replaced slave BMS 110 and the replaced slave BMS 120 are valid based on whether the first certificate is intact.

According to an embodiment, the step (S4710) of verifying the integrity of the first certificate may include a step (S4711) of the master BMS 200 verifying the validity of the second certificate by verifying the integrity of the certificate chain, and a step (S4712) of the master BMS 200 verifying the integrity of the first certificate using the valid second certificate.

In the step (S4711) of the master BMS 200 verifying the validity of the second certificate by verifying the integrity of the certificate chain, the master BMS 200 may verify the signature of the second certificate using the public key of the third certificate included in the certificate chain and may verify the signature of the third certificate using the public key of the fourth certificate included in the certificate chain to determine the integrity of the certificate chain.

In the step (S4712) of verifying the integrity of the first certificate using the valid second certificate, the master BMS 200 may verify the integrity of the first certificate by verifying the signature of the first certificate using the public key of the valid second certificate.

In the communication ID re-allocation step (S4800), the master BMS 200 may reallocate the second communication ID to the valid slave BMS 100 among the non-replaced slave BMS 110 and the replaced slave BMS 120

At this time, the master BMS 200 may instruct the reallocation of the second communication ID by transmitting a communication ID reallocation signal to the valid slave BMSs 100 among the non-replaced slave BMS 110 and the replaced slave BMS 120.

Meanwhile, the above-described method may be written with a program that can be executed on a computer, and may be implemented on a generalpurpose digital computer that operates the program using computer-readable recording media. The computer-readable recording media may include a storage medium such as a magnetic storage medium such as a ROM, a RAM, a USB, a floppy disk, a hard disk, or an optical readable medium such as a CD-ROM or a DVD.

The scope of the present disclosure is defined by the following claims rather than by the detailed description of the embodiments, and it should be understood that all modifications and embodiments conceived from the meaning and scope of the claims and their equivalents are included in the scope of the present disclosure.

## Claims

1. A system for allocating a communication ID, comprising:
a plurality of slave BMSs each storing a plurality of first certificates; and
a master BMS including a certificate chain,
wherein the master BMS comprises
a memory configured to store the certificate chain; and
a processor configured to transmit a certificate transmission request signal to the plurality of slave BMSs based on detecting communication connection with the plurality of slave BMSs, receive each of the plurality of first certificates from each of the plurality of slave BMSs, verify the integrity of each of the plurality of first certificates using the certificate chain, determine the validity of each of the plurality of slave BMSs based on whether each of the plurality of first certificates is intact, and allocate a first communication ID to valid slave BMSs among the plurality of slave BMSs.

2. The system for allocating the communication ID of claim 1, wherein
the processor is configured to
determine whether the certificate chain is intact by verifying the signatures of second and third certificates included in the certificate chain,
determine that the second certificate is to be valid based on determining that the certificate chain is intact, and
verify the integrity of each of the plurality of first certificates by verifying the signature of each of the plurality of first certificates using the public key of the valid second certificate.

3. The system for allocating the communication ID of claim 1, wherein
the processor is configured to
determine a slave BMS storing a first certificate whose integrity has been verified as valid, and determine a slave BMS storing a first certificate whose integrity has not been verified among the plurality of slave BMSs as invalid.

4. The system for allocating the communication ID of claim 1, wherein
the processor is configured to
allocate the first communication ID using the voltage difference or communication signal value of the valid slave BMSs.

5. The system for allocating the communication ID of claim 1, wherein
the processor is configured to
transmit a communication ID reset signal to a non-replaced slave BMS among the plurality of slave BMSs to reset the first communication ID based on detecting replacement of at least one slave BMS among the plurality of slave BMSs, and
transmit a certificate transmission request signal to the non-replaced slave BMS and the replaced slave BMS to receive the first certificate from the non-replaced slave BMS and the replaced slave BMS.

6. The system for allocating the communication ID of claim 5, wherein
the processor is configured to
determine the validity of the non-replaced slave BMS based on whether the integrity of the first certificate received from the non-replaced slave BMS is verified, and
determine the validity of the replaced slave BMS based on whether the integrity of the first certificate received from the replaced slave BMS is verified.

7. The system for allocating the communication ID of claim 6, wherein
the processor is configured to
determine a slave BMS storing a first certificate whose integrity has been verified as valid, and determine a slave BMS storing a first certificate whose integrity has not been verified as invalid among the non-replaced slave BMS and the replaced slave BMS.

8. The system for allocating the communication ID of claim 7, wherein
the processor is configured to
reallocate a second communication ID to a valid slave BMS among the non-replaced slave BMS and the replaced slave BMS.

9. A method for allocating a communication ID, comprising:
a master BMS transmitting a certificate transmission request signal to a plurality of slave BMSs based on detecting communication connection with a plurality of slave BMSs;
receiving each of a plurality of first certificates from each of the plurality of slave BMSs;
verifying the integrity of each of the plurality of first certificates using a certificate chain stored in memory, and determining the validity of each of the plurality of slave BMSs based on whether each of the plurality of first certificates is intact; and
allocating a first communication ID to valid slave BMSs among the plurality of slave BMSs.

10. The method for allocating the communication ID of claim 9, wherein
the determining of the validity of each of the plurality of slave BMSs comprises:
the master BMS verifying the integrity of the certificate chain to confirm the validity of the second certificate included in the certificate chain; and
verifying the integrity of each of the plurality of first certificates by verifying the signature of each of the plurality of first certificates using the public key of the valid second certificate.

11. The method for allocating the communication ID of claim 9, wherein
the assigning of the first communication ID comprises
the master BMS transmitting a communication ID allocation signal to the valid slave BMSs to instruct allocation of the first communication ID.

12. The method for allocating the communication ID of claim 9, comprising:
the master BMS resetting the first communication ID allocated to a non-replaced slave BMS among the plurality of slave BMSs based on detecting the replacement of at least one slave BMS among the plurality of slave BMSs to which the first communication ID is allocated, and generating and transmitting a certificate transmission request signal to the non-replaced slave BMS and the replaced slave BMS;
receiving a first certificate from each of the non-replaced slave BMS and the replaced slave BMS;
verifying the integrity of the first certificate using the certificate chain and determining the validity of the non-replaced slave BMS and the replaced slave BMS based on whether the first certificate is intact; and
reallocating a second communication ID to a valid slave BMS among the non-replaced slave BMS and the replaced slave BMS.

13. The method for allocating the communication ID of claim 12, wherein
the determining of the validity of the non-replaced slave BMS and the replaced slave BMS comprises:
the master BMS verifying the integrity of the certificate chain to confirm the validity of the second certificate included in the certificate chain; and
verifying the integrity of each of the plurality of first certificates by verifying the signature of each of the plurality of first certificates using the public key of the valid second certificate.

14. The method for allocating the communication ID of claim 12, wherein
the reallocating of the second communication ID comprises
transmitting a communication ID reallocation signal to a valid slave BMS among the non-replaced slave BMS and the replaced slave BMS to instruct reallocation of the second communication ID.
